# EUROPEAN PATENT APPLICATION

(11) **EP 4 618 381 A1**
(43) Date of publication of application: **17.09.2025**
(21) Application number: 23887740.1
(22) Date of filing: 20.10.2023
(51) Int. Cl.: H02K 15/04, H02K 15/085, H02K 3/12, H02K 1/16

(54) **WAVE WINDING FORMING PROCESS OF COIL, AND APPARATUS, HAIR-PIN WINDING, STATOR AND MOTOR**

(30) Priority: 07.11.2022 CN 202211387287
(71) Applicant: XPT EDS (Hefei) Co., Ltd., Hefei City, Anhui 230601 (CN)
(72) Inventor: ZHANG, Xianghong, Hefei, Anhui 230601 (CN); LI, Weiya, Hefei, Anhui 230601 (CN); HONG, Wei, Hefei, Anhui 230601 (CN); DAI, Xingwu, Hefei, Anhui 230601 (CN); AN, Zhiwei, Hefei, Anhui 230601 (CN); DING, Chen, Hefei, Anhui 230601 (CN)
(74) Representative: Vossius & Partner Patentanwälte Rechtsanwälte mbB
(86) International application number: PCT/CN2023/125580
(87) International publication number: WO 2024/099048

(57) **Abstract**

A wave winding forming process and apparatus for a coil, a flat-wire wave winding, a stator, and a motor. The wave winding forming process includes the following steps: performing wave winding forming on a conductor to obtain a formed conductor (100), where the formed conductor (100) has at least two straight conductor sections (101) extending in an axial direction of a stator (1000) and at least one bent bridging conductor section (102) connecting two adjacent straight conductor sections (101); offsetting the bridging conductor section (102) of each formed conductor (100) from the straight conductor sections (101) connected to the bridging conductor section in a radial direction of the stator (1000), such that after the formed conductor (100) is formed into a winding (200), there is at least a gap t between adjacent bridging conductor sections (102) at an end portion of the winding (200); arranging a plurality of formed conductors (100) according to a winding pattern and winding the plurality of formed conductors around a mandrel (40) to form the winding (200); and embedding the winding (200) into stator slots (300) by means of the mandrel (40).

## Description

### Technical Field

The invention relates to the technical field of machining of motor stator windings, and particularly to a wave winding forming process and apparatus for a coil, a flat-wire wave-wound coil, a stator, and a motor.

### Background Art

In new energy vehicles, flat-wire motors are increasingly used. The forming and insertion of flat wires of a flat-wire motor include a hair-pin type and a W-pin type. Compared with the hair-pin type forming and insertion, a W-pin coil is formed continuously with bending, welding, and other processes dispensed with, has advantages such as a shorter end portion and a smaller occupied axial space, improves the power density of the coil, and is suitable for various new energy motors.

As for difficulties in forming a flat-wire W-pin coil, a wire is inserted in a stator slot by means of radial expansion during wire embedding, an insulation gap in each layer is narrowed due to compression during the expansion, and when an end portion is compressed, damages may be caused to a conductor at the end portion, resulting in a degraded insulation performance, and particularly damages may be caused to phase-to-phase insulation, resulting in a reduced phase-to-phase partial discharge inception voltage (PDIV) value.

### Summary

A technical problem to be solved by an aspect of the invention is how to prevent an insulation gap in a coil from narrowing during W-pin forming.

In addition, other aspects of the invention also aim to solve or alleviate other technical problems existing in the prior art.

The invention provides a wave winding forming process and apparatus for a coil, a flat-wire wave winding, a stator, and a motor, and particularly provides, according to an aspect of the invention:
a wave winding forming process for a coil, the process including the following steps:
performing wave winding forming on a conductor to obtain a formed conductor, wherein the formed conductor has at least two straight conductor sections extending in an axial direction of a stator and at least one bent bridging conductor section connecting two adjacent straight conductor sections;
offsetting the bridging conductor section of each formed conductor from the straight conductor sections connected to the bridging conductor section in a radial direction of the stator, such that after the formed conductor is formed into a winding, there is at least a gap t between adjacent bridging conductor sections at an end portion of the winding;
arranging a plurality of formed conductors according to a winding pattern and winding the plurality of formed conductors around a mandrel to form the winding; and
embedding the winding into stator slots by means of the mandrel.

Optionally, according to an implementation of the invention, the bridging conductor section includes a first bent section and a second bent section that are connected to each other, the first bent section and the second bent section each being connected to one straight conductor section, and after the offsetting, the first bent section and the second bent section each at least protruding outwardly by a distance T relative to the straight conductor sections correspondingly connected to the first bent section and the second bent section in the radial direction of the stator.

Optionally, according to an implementation of the invention, the distance T is associated with a layer k in which the straight conductor sections of the formed conductor are located in the stator slots.

Optionally, according to an implementation of the invention, the gap t ranges from 0.3 mm to 2.5 mm.

Optionally, according to an implementation of the invention, in the winding formed by winding the formed conductors, the distance T between the straight conductor sections in a k^{th} layer counting outwardly from a rotor and the first bent section and the second bent section correspondingly connected to the straight conductor sections in the radial direction of the stator is (k - 1) * t.

Optionally, according to an implementation of the invention, the step of embedding the winding into stator slots by means of the mandrel includes the following substeps:
placing the winding into the stator slots by means of the mandrel; and
expanding the winding in the radial direction of the stator by means of an expansion mechanism mounted in the mandrel, so as to embed the winding into the stator slots.

Optionally, according to an implementation of the invention, after the winding is expanded by means of the expansion mechanism to embed the winding into the stator slots, the end portion of the winding is expanded by means of an expansion tooling to increase a gap between end portions of adjacent formed conductor layers.

Optionally, according to an implementation of the invention, the expansion tooling is inserted, in the axial direction of the stator, between bridging conductor sections that are opposite in the radial direction of the stator to expand the end portion of the winding.

Optionally, according to an implementation of the invention, the expansion tooling performs expansion inwardly gradually from an outermost formed conductor layer in the radial direction of the stator in a circumferential direction of the stator.

Optionally, according to an implementation of the invention, the wave winding forming process further includes the following step:
coating an insulating paint on the winding, where the insulating paint is applied in a gap between formed conductor layers.

According to another aspect of the invention, the invention provides an apparatus for wave winding forming of a coil, the apparatus including:
a wave winding forming mechanism for performing wave winding forming on a conductor to obtain a formed conductor, wherein the formed conductor has at least two straight conductor sections extending in an axial direction of a stator and at least one bent bridging conductor section connecting two adjacent straight conductor sections;
a conductor twisting mechanism for offsetting the bridging conductor section of each formed conductor from the straight conductor sections connected to the bridging conductor section in a radial direction of the stator, such that after the formed conductor is formed into a winding, there is at least a gap t between adjacent bridging conductor sections at an end portion of the winding;
a winding coiling mechanism for arranging a plurality of formed conductors according to a winding pattern and winding the plurality of formed conductors around a mandrel to form the winding; and
the mandrel for embedding the winding into stator slots.

Optionally, according to an implementation of another aspect of the invention, the bridging conductor section includes a first bent section and a second bent section that are connected to each other, the first bent section and the second bent section each being connected to one straight conductor section, and after the offsetting, the first bent section and the second bent section each at least protruding outwardly by a distance T relative to the straight conductor sections correspondingly connected to the first bent section and the second bent section in the radial direction of the stator.

Optionally, according to an implementation of another aspect of the invention, the distance T is associated with a layer k in which the straight conductor sections of the formed conductor are located in the stator slots.

Optionally, according to an implementation of another aspect of the invention, the gap t ranges from 0.3 mm to 2.5 mm.

Optionally, according to an implementation of another aspect of the invention, in the winding formed by winding the formed conductors, the distance T between the straight conductor sections in a k^{th} layer counting outwardly from a rotor and the first bent section and the second bent section correspondingly connected to the straight conductor sections in the radial direction of the stator is (k - 1) * t.

Optionally, according to an implementation of another aspect of the invention, an expansion mechanism is mounted in the mandrel, and expands the winding in the radial direction of the stator to embed the winding into the stator slots.

Optionally, according to an implementation of another aspect of the invention, the apparatus further includes:
an expansion tooling for expanding the end portion of the winding after the winding is expanded by the expansion mechanism, so as to increase a gap between end portions of adjacent formed conductor layers; and
a stator driving mechanism for driving the stator to move in the axial direction of the stator and rotate about an axis of the stator, to cooperate with an expansion action of the expansion tooling.

Optionally, according to an implementation of another aspect of the invention, the expansion tooling is inserted, in the axial direction of the stator, between bridging conductor sections that are opposite in the radial direction of the stator to expand the end portion of the winding.

Optionally, according to an implementation of another aspect of the invention, the expansion tooling performs expansion inwardly gradually from an outermost formed conductor layer in the radial direction of the stator in a circumferential direction of the stator.

According to a further aspect of the invention, the invention provides a flat-wire wave-wound coil. The flat-wire wave-wound coil is manufactured by the wave winding forming process described above.

According to a further aspect of the invention, the invention provides a stator. The stator has a flat-wire wave-wound coil as described above.

According to a further aspect of the invention, the invention provides a motor. The motor has the stator described above.

Benefits of the invention are as follows: In the wave winding forming process of the invention, during preforming of a conductor, a corresponding forming gap is reserved for a bridging conductor section according to a layer in which the conductors in stator slots on two sides are located, an end portion is sequentially expanded layer by layer from outside to inside during expansion of a coil, and no damage is caused to the end portion during expansion and forming, such that a phase-to-phase gap is maintained, and a PDIV and a breakdown voltage after the coil is dipped in a paint to fill a gap are significantly increased compared with an existing process.

### Brief Description of the Drawings

The above and other features of the invention will become apparent with reference to the accompanying drawings, in which:
FIG. 1 shows a schematic flowchart of a wave winding forming process for a coil according to an implementation of the invention;
FIG. 2 shows a schematic structural diagram of a single formed conductor of a flat-wire wave-wound coil according to an implementation of the invention;
FIG. 3 shows an enlarged view of a bridging conductor section of a single formed conductor of a flat-wire wave-wound coil that is twisted according to an implementation of the invention;
FIG. 4 shows a three-dimensional diagram of a single twisted formed conductor of a flat-wire wave-wound coil that is twisted according to an implementation of the invention;
FIG. 5 is a schematic structural diagram of an expansion mechanism and a winding before the winding is expanded by the expansion mechanism;
FIG. 6 is a schematic structural diagram of an expansion mechanism and a winding after the winding is expanded by the expansion mechanism;
FIG. 7 is a schematic structural diagram of a stator of a winding embedded into stator slots;
FIG. 8 shows an enlarged view of a flat-wire wave-wound coil according to an implementation of the invention during expansion;
FIG. 9 shows an enlarged view of an end portion of an expansion tooling;
FIG. 10 shows a schematic diagram of a positional relationship between an expansion tooling and a winding during expansion; and
FIG. 11 shows a schematic structural diagram of an apparatus for wave winding forming of a coil according to an implementation of the invention.

### Detailed Description of Embodiments

It can be readily understood that according to the technical solutions of the invention, those of ordinary skill in the art may propose a plurality of interchangeable structures and implementations without changing the essential spirit of the invention. Therefore, the following specific implementations and the accompanying drawings are merely exemplary descriptions of the technical solutions of the invention, and should not be construed as the entirety of the invention or construed as limiting the technical solution of the invention.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding members.

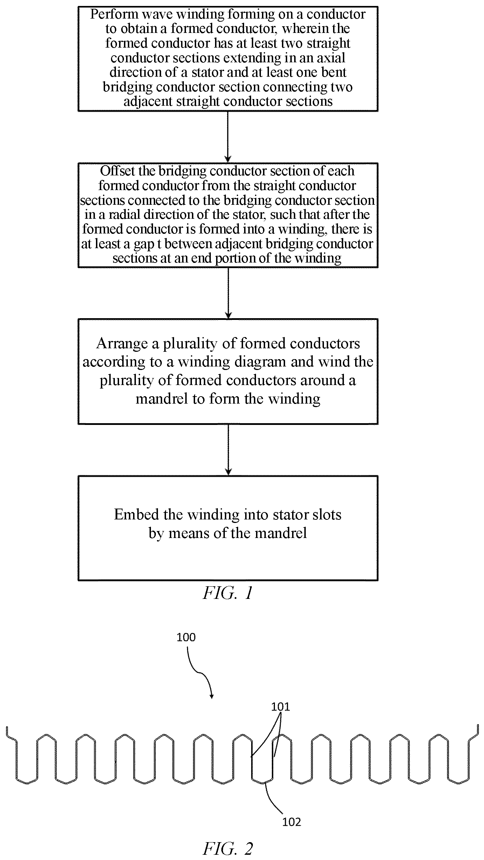

A wave winding forming process of the invention aims to improve the insulation performance of a coil. Referring to FIG. 1, this figure shows a schematic flowchart of a wave winding forming process for a coil according to an implementation of the invention. The process includes the following steps.

In step 1, wave winding forming is performed on a conductor to obtain a formed conductor 100, where the formed conductor 100 has at least two straight conductor sections 101 extending in an axial direction of a stator 1000 and at least one bent bridging conductor section 102 connecting two adjacent straight conductor sections.

A wave winding formed coil is usually formed by a plurality of formed conductors, for example, four formed conductors. In the coil forming process, first, wave winding forming needs to be performed on each conductor. In other words, each conductor is formed into the formed conductor 100 having at least two straight conductor sections 101 extending in the axial direction of the stator and at least one bent bridging conductor section 102 connecting two adjacent straight conductor sections. The formed conductor 100 constructed as thus is in the form of a periodic wave. Referring to FIG. 2, this figure shows a schematic structural diagram of a single formed conductor of a flat-wire wave-wound coil according to an implementation of the invention. Two adjacent straight conductor sections 101 are connected by the bridging conductor section 102. The bridging conductor section 102 is, for example, bent away from the stator 1000 in the axial direction of the stator. Therefore, the bridging conductor section 102 forms a structure in the form of an isosceles triangle or a semi-rhombus. In this case, the straight conductor sections 101 and the bridging conductor section 102 are located in the same plane. The bridging conductor section 102 is configured as a shape similar to a V shape, in other words, includes a first bent section 103 and a second bent section 104 that are connected to each other. The first bent section 103 and the second bent section 104 each are connected to one straight conductor section.

In step 2, the bridging conductor section 102 of each formed conductor 100 is offset in a radial direction of the stator relative to a straight conductor section 101 correspondingly connected thereto, such that the first bent section 103 and the second bent section 104 of the bridging conductor section 102 each protrude outwardly by at least a distance T relative to the straight conductor sections correspondingly connected to the first bent section and the second bent section in the radial direction of the stator, and after the formed conductor is formed into a winding, there is at least a gap t between adjacent bridging conductor sections at an end portion of the winding. When the formed conductor is finally formed into the winding, the two straight conductor sections connected by the bridging conductor section 102 may be located in the same layer or may be located in different layers in stator slots. When the two straight conductor sections need to be located in the same layer, during wave winding forming, the bridging conductor section 102 generally at least protrudes outwardly by the distance T in the radial direction of the stator relative to both the two straight conductor sections. When the two straight conductor sections need to be located in different layers (for example, adjacent layers), the first bent section 103 and the second bent section 104 each protrude outwardly by at least the distance T in the radial direction of the stator relative to the straight conductor sections correspondingly connected to the first bent section and the second bent section. After the formed conductor 100 is formed into the winding 200, a relationship between the distance T and the gap t is described below in detail.

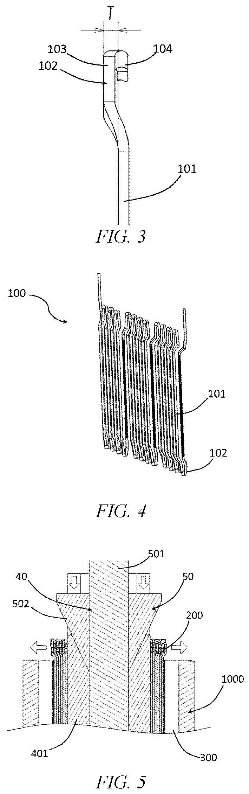

Referring to FIG. 3, this figure shows an enlarged view of a bridging conductor section of a single formed conductor of a flat-wire wave-wound coil that is twisted according to an implementation of the invention. In order that after the formed conductors 100 are wound into the winding 200, there can be a certain insulation gap between formed conductor layers formed thereby in the radial direction of the stator, the bridging conductor section 102 of each formed conductor 100 is offset from the straight conductor sections 101 connected thereto in the radial direction of the stator, such that the first bent section 103 and the second bent section 104 of the bridging conductor section 102 each protrude outwardly by the distance T from the straight conductor sections correspondingly connected to the first bent section and the second bent section in the radial direction of the stator. In other words, in this case, the first bent section 103 and the second bent section 104 of the bridging conductor section 102 are not in the same plane as the straight conductor section 101 adjacent thereto, but instead are offset outwardly by the distance T in the radial direction of the stator from the straight conductor sections correspondingly connected to the first bent section and the second bent section in the radial direction of the stator, such that after the formed conductor is formed into the winding, there is the gap t between adjacent bridging conductor sections at the end portion of the winding. FIG. 4 shows a three-dimensional diagram of a single formed conductor of a flat-wire wave-wound coil that is twisted according to an implementation of the invention. The presence of the distance T results in the gap t between end portions of the formed conductor layers of the winding 200 after the formed conductors 100 are wound into a winding 200, so as to prevent the formed conductor layers from being attached together without a gap which otherwise affects a subsequent operation of filling an insulating paint, thereby improving the insulation performance of the coil.

In an implementation of the invention, the distance T is associated with a layer k in which the straight conductor sections of the formed conductors is located in the stator slots. The value of the gap t ranges from 0.3 mm to 2.5 mm. When a voltage level of a motor is higher, the value of t is larger.

In step 3, a plurality of formed conductors 100 are arranged according to a winding pattern and are wound around a mandrel 40 to form the winding 200.

In step 3, the formed conductors 100 are arranged and wound by using a flat-wire W-pin forming method for a coil. In the flat-wire W-pin forming method, a number of formed conductors 100 that can be accommodated in each stator slot 300 is specified in the winding pattern. Therefore, a number of the formed conductor layers of the winding 200 formed by the formed conductors 100 is defined. The formed conductors 100 are arranged according to the winding pattern. For example, each formed conductor 100 is staggered by a certain distance for stacked arrangement, such that bridging conductor sections 102 at end portions of adjacent formed conductor layers are arranged staggered with each other. After the arrangement of the formed conductors 100 is completed, the formed conductors 100 are wound around the mandrel 40, such that the formed conductors 100 are preformed into the form of the winding 200, facilitating placing the formed conductors 100 into the stator slots 300 by means of radial expansion.

In step 4, the winding 200 is embedded into the stator slots 300 by means of the mandrel 40.

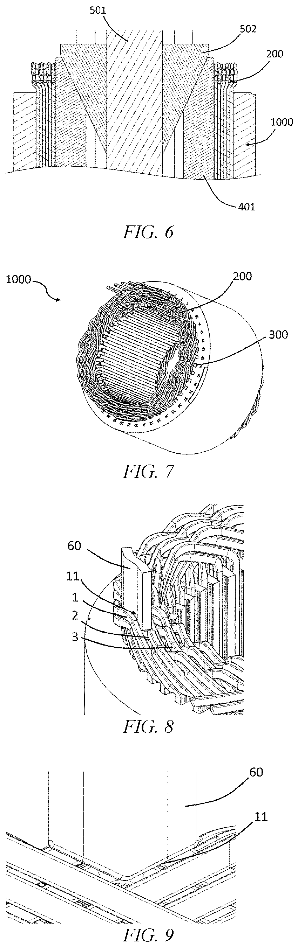

FIG. 5 shows a schematic structural diagram of an expansion mechanism and a winding before the winding is expanded by the expansion mechanism. After the formed conductors 100 are wound around the mandrel 40 to form the winding 200, the winding 200 is embedded into the stator slots 300 by means of the mandrel 40. If the winding 200 is embedded into the stator slots 300 by means of the mandrel 40 only in the axial direction of the stator, the straight conductor sections 101 of the winding 200 may fail to be completely clamped into the stator slots 300. Therefore, in an implementation of the invention, an outer wall 401 of the mandrel 40 is configured to be expandable or shrinkable in the radial direction of the stator. An expansion mechanism 50 is mounted in the mandrel 40. The expansion mechanism 50 can expand the mandrel 40 in a radial direction of the stator 1000, to expand the outer wall 401 of the mandrel outwardly and increase its diameter, such that the winding 200 wound around the mandrel 40 can be expanded in the radial direction of the stator, so as to push the straight conductor sections 101 of the winding 200 into the stator slots 300 in the radial direction of the stator. FIG. 6 shows a schematic structural diagram of a winding 200 expanded by the expansion mechanism 50. The expansion mechanism 50 is configured to include a central shaft 501 and an inverted conical slider 502 that is movable on the central shaft 501 in the axial direction of the stator. The slider 502 is located away from the stator 1000 when the winding 200 is initially placed in the stator 1000. When the winding 200 needs to be expanded, the slider 502 moves toward the stator 1000 in the axial direction of the stator. A radius of the slider 502 in contact with the outer wall 401 of the mandrel 40 increases continuously, such that the outer wall 401 of the mandrel 420 is gradually expanded outwardly in the radial direction of the stator and forces the straight conductor sections 101 into the stator slots 300.

FIG. 7 shows a schematic structural diagram of a stator of a winding embedded into stator slots. As can be seen in FIG. 7, after the winding 200 is formed by winding the formed conductors 100 and embedded into the stator slots 300, the winding 200 forms a structure with a plurality of formed conductor layers, and each formed conductor layer has a plurality of formed conductors. An end portion of each formed conductor layer in the axial direction of the stator is formed by bridging conductor sections 102, and bridging conductor sections at end portions of adjacent formed conductor layers are arranged spaced apart from each other. When the straight conductor sections are all accommodated in the stator slots, assuming that the straight conductor section closest to a rotor is a first layer, a thickness of the formed conductor in the radial direction of the stator is s, and an insulation gap between straight conductor sections is r, a radial offset of the straight conductor section of a k^{th} layer from the straight conductor sections of the first layer is (k - 1) * (s + r). Due to the presence of the distance T and an arrangement of the formed conductors in the winding, a radial offset of the bridging conductor section of the k^{th} layer from the straight conductor sections of the k^{th} layer correspondingly connected thereto, i.e., the distance T, is (k - 1) * t. If the two straight conductor sections connected by the bridging conductor section are respectively located in the k^{th} layer and a (k + 1)^{th} layer, radial offsets of two ends of the bridging conductor section from the straight conductor sections connected thereto, i.e., the distances T, are respectively (k - 1) * t and k * t. It should be noted that the above radial offsets are theoretical radial offsets after the formed conductors are formed into the winding. During winding, due to mutual compression between copper conductors, actual radial offsets are reduced. In an implementation of the invention, after the winding 200 is expanded by the mandrel 40 to embed the winding 200 into the stator slots 300, the winding 200 is expanded at the end portion by an expansion tooling 60. When the winding is finally combined into the stator, voltages at adjacent bridging conductor sections at the end portion of the winding have different phases, and there is an insulation problem. Therefore, a sufficient gap should be provided between adjacent bridging conductor sections at the end portion of the winding, so as to prevent breakdown which otherwise causes an insulation problem. During winding the formed conductors 100 and expanding the winding 200 by the mandrel 40, the distance T formed during the preforming of the formed conductors 100 may be reduced due to the compression between the plurality layers of formed conductors. As such, gaps between the plurality layers of formed conductors of the winding 200 may impair subsequent insulation performance. Therefore, the bridging conductor sections 102 at the end portion of the winding 200 may be expanded by the expansion tooling 60, to widen the gap t between the bridging conductor sections 102 at the end portion of each formed conductor layer. In this way, a larger space can be reserved for coating the insulating paint, thereby improving the insulation performance of the winding at the end portion. After the expansion is finished, it can be ensured that the insulation gap between the bridging conductor sections 102 at the end portion of the winding is at least 0.1 mm.

FIG. 8 shows a schematic diagram of a flat-wire wave-wound coil according to an implementation of the invention during expansion. In the formed winding 200, each layer of formed conductors is arranged staggered with a formed conductor layer adjacent thereto by approximately one bridging conductor section 102. An outermost formed conductor layer 1 in the radial direction of the stator is considered as the first layer, and a bridging conductor section that is directly opposite a bridging conductor section at an end portion of the outermost formed conductor layer 1 is a bridging conductor section at an end portion of a third formed conductor layer 3 counting from outside to inside. Bridging conductor sections at an end portion of the second formed conductor layer 2 are staggered with the bridging conductor sections of the first formed conductor layer 1 in the radial direction of the stator. Therefore, a rhombic space 11 (the space has been filled with the expansion tooling 60 in FIG. 8) is formed between the bridging conductor section at the end portion of the first formed conductor layer 1 and the bridging conductor section that is directly opposite thereto in the radial direction of the stator. An end portion of the expansion tooling 60 facing the stator 1000 is inserted into the rhombic space 11 for expansion, in order to increase the gap between the bridging conductor sections at end portions of adjacent formed conductor layers (for example, the first layer and the second layer). Referring to FIG. 9, this figure shows an enlarged view of an end portion of an expansion tooling. The end portion of the expansion tooling 60 facing the stator 1000 is, for example, configured as the form of an isosceles triangle (a semi-rhombus) matching with the rhombic space 11, for better insertion into the rhombic space 11 for expansion.

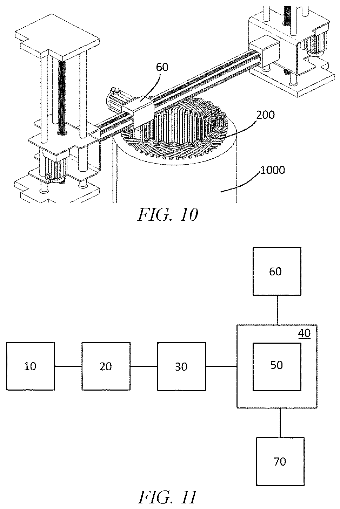

In an implementation of the invention, the expansion tooling 60 carries out expansion inwardly gradually in a circumferential direction of the stator from an outermost formed conductor layer in the radial direction of the stator. FIG. 10 shows a schematic diagram of a positional relationship between an expansion tooling and a winding during expansion. As can be seen in FIG. 10, the expansion tooling 60 is arranged on a shaft extending in the radial direction of the stator and is movable along the shaft. The expansion tooling 60 first flares the bridging conductor sections at the end portion of each first layer and the bridging conductor sections at the end portion of the second layer, i.e., is first sequentially inserted in the axial direction into the rhombic spaces between the bridging conductor sections at the end portion of the first layer and the bridging conductor sections at the end portion of the third layer that is opposite thereto in the radial direction of the stator, and then flares the bridging conductor sections of each second layer and the bridging conductor sections of the third layer, i.e., is sequentially inserted in the axial direction into the rhombic spaces between the bridging conductor sections at the end portion of the second layer and the bridging conductor sections at the end portion of the fourth layer that is opposite thereto in the radial direction of the stator. This method for carrying out expansion sequentially from outside to inside allows the expansion tooling 60 to be subjected to a small expansion force during expansion, and also facilitates easier entry of the expansion tooling 60 into the rhombic spaces between formed conductor layers. During expansion of the bridging conductor sections in the same layer in the circumferential direction of the stator, the expansion tooling 60 only moves vertically, and the stator 1000 rotates by means of a stator driving mechanism 70 about a central axis thereof, to implement displacements of various bridging conductor sections.

In an implementation of the invention, after the winding 200 is expanded, the insulating paint is coated on the winding 200. The insulating paint is usually coated by dipping the winding 200 in the insulating paint. Because of the gaps between the formed conductor layers, particularly the gaps between the bridging conductor sections at the end portions of the formed conductor layers, the insulating paint can adequately enter the gaps to coat the winding 200, such that the insulating paint can uniformly and completely cover a surface of the winding 200, thereby ensuring the insulation performance of the winding 200.

According to another aspect of the invention, an apparatus for wave winding forming of a coil is further provided. The apparatus may be configured to perform the foregoing wave winding forming process. FIG. 11 shows an apparatus for wave winding forming of a coil according to an implementation of the invention. In this system, since a specific shape and an internal structure of each component are not the subject matter of the invention, for the ease of clarity and conciseness, all these components are schematically shown in the form of structural modules. Those skilled in the art can make their own choices for appropriate module shapes and structural forms, etc. under the motivation of the structural diagram. In addition, the given structural diagram is an embodiment of the invention. Those skilled in the art can make various modifications without departing from the spirit of the invention after referring to the diagram, which should also fall within the scope of protection of the invention. The apparatus includes:
a wave winding forming mechanism 10 for performing wave winding forming on a conductor to obtain a formed conductor 100, where the formed conductor 100 has at least two straight conductor sections 101 extending in an axial direction of a stator and at least one bent bridging conductor section 102 connecting two adjacent straight conductor sections;
a conductor twisting mechanism 20 for offsetting the bridging conductor section 102 of each formed conductor 100 from the straight conductor sections 101 connected thereto in a radial direction of the stator, such that after the formed conductor is formed into a winding, there is at least a gap t between adjacent bridging conductor sections at an end portion of the winding;
a winding coiling mechanism 30 for arranging a plurality of formed conductors 100 according to a winding pattern and winding the plurality of formed conductors 100 around a mandrel 40 to form the winding 200; and
the mandrel 40 for embedding the winding 200 into stator slots 300.

In an implementation of the invention, the bridging conductor section 102 includes a first bent section 103 and a second bent section 104 that are connected to each other. The first bent section 103 and the second bent section 104 each are connected to one straight conductor section. After the offsetting, the first bent section 103 and the second bent section 104 each at least protrude outwardly by a distance T from the straight conductor sections correspondingly connected to the first bent section and the second bent section in the radial direction of the stator.

In an implementation of the invention, the distance T is associated with a layer k in which the straight conductor sections of the formed conductors are located in the stator slots.

In an implementation of the invention, the gap t ranges from 0.3 mm to 2.5 mm.

In an implementation of the invention, in the winding formed by winding the formed conductors, the distance T between the straight conductor sections in a k^{th} layer counting outwardly from a rotor and the first bent section and the second bent section correspondingly connected to the straight conductor sections in the radial direction of the stator is (k - 1) * t.

In an implementation of the invention, an expansion mechanism 50 is mounted in the mandrel 40, and expands the winding 200 in the radial direction of the stator to embed the winding 200 into the stator slots 300. In the implementation, the mandrel 40 includes an outer wall 401. The expansion mechanism 50 includes a central shaft 501 and a slider 502. The outer wall 401 of the mandrel 40 may expand and shrink in a radial direction of the mandrel 40. The slider 502 is configured as an inverted conical shape, is mounted on the central shaft 501, and is vertically movable along the central shaft 501. When the slider 502 slides toward the stator 1000 along the central shaft 501, the diameter of the slider increases continuously to force the outer wall 401 of the mandrel 40 to expand outwardly. In this way, the winding 200 wound around the outer wall 401 of the mandrel 40 is driven to expand outwardly and is embedded into the stator slots 300.

In an implementation of the invention, the apparatus further includes:
an expansion tooling 60 for expanding an end portion of the winding 200 after the winding 200 is expanded by the expansion mechanism 50, so as to increase a gap between end portions of adjacent formed conductor layers; and
a stator driving mechanism 70 for driving the stator 1000 to move in the axial direction of the stator and rotate about an axis of the stator, to cooperate with an expansion action of the expansion tooling 60.

In an implementation of the invention, the expansion tooling 60 is inserted, in the axial direction of the stator, between bridging conductor sections that are opposite each other in the radial direction of the stator to expand the end portion of the winding 200.

In an implementation of the invention, the expansion tooling 60 performs expansion inwardly gradually in a circumferential direction of the stator from an outermost formed conductor layer in the radial direction of the stator.

Since the wave winding forming process for a coil of the invention has been described very exhaustively above, reference may be directly made to the foregoing detailed descriptions of corresponding parts to implement more possible apparatuses or mechanisms obtained by making additions, modifications or substitutes to the apparatus for wave winding forming of a coil of the invention. Details will not be described again herein.

According to another aspect of the invention, a flat-wire wave-wound coil is further provided. The flat-wire wave-wound coil is manufactured by the foregoing process.

According to a further aspect of the invention, a stator is further provided. The stator has a flat-wire wave-wound coil as described above.

According to a further aspect of the invention, a motor is further provided. The motor has a stator as described above.

It should be understood that all of the above preferred embodiments are exemplary rather than limiting, and any modification or variation made by those skilled in the art to the specific embodiments described above without departing from the concept of the invention shall fall within the scope of legal protection of the invention.

## Claims

1. A wave winding forming process for a coil, **characterized by** comprising the following steps:
performing wave winding forming on a conductor to obtain a formed conductor, wherein the formed conductor has at least two straight conductor sections extending in an axial direction of a stator and at least one bent bridging conductor section connecting two adjacent straight conductor sections;
offsetting the bridging conductor section of each formed conductor from the straight conductor sections connected to the bridging conductor section in a radial direction of the stator, such that after the formed conductor is formed into a winding, there is at least a gap t between adjacent bridging conductor sections at an end portion of the winding;
arranging a plurality of formed conductors according to a winding pattern and winding the plurality of formed conductors around a mandrel to form the winding; and
embedding the winding into stator slots by means of the mandrel.

2. The wave winding forming process according to claim 1, **characterized in that** the bridging conductor section comprises a first bent section and a second bent section that are connected to each other, the first bent section and the second bent section each being connected to one straight conductor section, and after the offsetting, the first bent section and the second bent section each at least protruding outwardly by a distance T relative to the straight conductor sections correspondingly connected to the first bent section and the second bent section in the radial direction of the stator.

3. The wave winding forming process according to claim 2, **characterized in that** the distance T is associated with a layer k in which the straight conductor sections of the formed conductor are located in the stator slots.

4. The wave winding forming process according to claim 1, **characterized in that** the gap t ranges from 0.3 mm to 2.5 mm.

5. The wave winding forming process according to claim 3, **characterized in that** in the winding formed by winding the formed conductors, the distance T between the straight conductor sections in a k^{th} layer counting outwardly from a rotor in the radial direction of the stator and the first bent section and the second bent section correspondingly connected to the straight conductor sections is (k - 1) * t.

6. An apparatus for wave winding forming of a coil, **characterized in that** the apparatus comprises:
a wave winding forming mechanism for performing wave winding forming on a conductor to obtain a formed conductor, wherein the formed conductor has at least two straight conductor sections extending in an axial direction of a stator and at least one bent bridging conductor section connecting two adjacent straight conductor sections;
a conductor twisting mechanism for offsetting the bridging conductor section of each formed conductor from the straight conductor sections connected to the bridging conductor section in a radial direction of the stator, such that after the formed conductor is formed into a winding, there is at least a gap t between adjacent bridging conductor sections at an end portion of the winding;
a winding coiling mechanism for arranging a plurality of formed conductors according to a winding pattern and winding the plurality of formed conductors around a mandrel to form the winding; and
the mandrel for embedding the winding into stator slots.

7. The apparatus according to claim 6, **characterized in that** the bridging conductor section comprises a first bent section and a second bent section that are connected to each other, the first bent section and the second bent section each being connected to one straight conductor section, and after the offsetting, the first bent section and the second bent section each at least protruding outwardly by a distance T relative to the straight conductor sections correspondingly connected to the first bent section and the second bent section in the radial direction of the stator.

8. The apparatus according to claim 7, wherein the distance T is associated with a layer k in which the straight conductor sections of the formed conductor are located in the stator slots.

9. The apparatus according to claim 6, **characterized in that** the gap t ranges from 0.3 mm to 2.5 mm.

10. The apparatus according to claim 8, **characterized in that** in the winding formed by winding the formed conductors, the distance T between the straight conductor sections in a k^{th} layer counting outwardly from a rotor in the radial direction of the stator and the first bent section and the second bent section correspondingly connected to the straight conductor sections is (k - 1) * t.

11. A flat-wire wave-wound coil, **characterized in that** the flat-wire wave-wound coil is manufactured by the wave winding forming process according to any one of claims 1 to 5.

12. A stator, **characterized in that** the stator has a flat-wire wave-wound coil according to claim 11.

13. A motor, **characterized in that** the motor has a stator according to claim 12.
